**Europäisches Patentamt**

(19) **European Patent Office**

**Office européen des brevets**

(11) Publication number : **0 000 230**
**B1**

(12) # EUROPEAN PATENT SPECIFICATION

(45) Date of publication of patent specification :
**21.01.81**

(21) Application number : **78200057.4**

(22) Date of filing : **21.06.78**

(51) Int. Cl.³ : **C 02 F 1/02**, C 02 F 1/66,
A 23 J 1/00

(54) Process for the biological purification of waste water.

(30) Priority : **27.06.77 NL 7707081**

(43) Date of publication of application :
**10.01.79 (Bulletin 79/01)**

(45) Publication of the grant of the patent :
**21.01.81 Bulletin 81/03**

(84) Designated contracting states :
**BE DE FR GB SE**

(56) References cited :
**CH - A - 583 525**
**FR - A - 2 332 959**

(73) Proprietor : **STAMICARBON B.V.**
**Postbus 10**
**NL-6160 MC Geleen (NL)**

(72) Inventor : **Dassen, Bernardus Henricus Nicolaas**
**Oude Schachtstraat 36**
**Kerkrade (NL)**

(74) Representative : **Van Leeuwen H.B. et al**
**Octrooibureau DSM Postbus 9**
**NL-6160 MA Geleen (NL)**

Imprimerie Jouve, 17, rue du Louvre, 75001 Paris, France

# 0 000 230

## Process for biological purification of waste water

The invention relates to a process for biological purification of waste water, in which an aqueous suspension of the surplus sludge formed during the purification is hydrolyzed in a basic medium and at an elevated temperature.

A process of this kind is known from the Netherlands Patent Application 6,911,163. According to this Application the sludge formed is hydrolyzed with the aid of sodium hydroxide or, possibly, calcium oxide. The resulting solid matter, mainly consisting of inorganic salts and waterinsoluble organic substances, like cell walls which are not, or only partly, hydrolyzed, is filtered off and subjected to further processing. The hydrolysate, which consists of an aqueous solution of mainly organic material and sodium salts, is returned to the purification plant. Although this process produces a great improvement in the disposal of sludge from a waste water purification plant, a few disadvantages are still attached to it.

Sodium hydroxide is here used for hydrolysis of sludge, as a result of which the hydrolysate contains rather large quantities of sodium ions. During a possible subsequent processing of the hydrolysate, which mainly consists of an aqueous solution of amino acids, oligopeptides and hydrolysis products of carbohydrates and fats, these sodium ions present problems. The basic amino acids are commercially important components of the hydrolysate. If one wants to recover these from the hydrolysate by means of selective ion exchange, all sodium ions present should be removed first, owing to which this process becomes unattractive economically.

Moreover, at the temperature and pH applied for the hydrolysis, racemization of the amino acids and peptides may occur. This causes a mixture of D- and L-amino acids to form which, economically, for instance as cattle feed, is less attractive. There is not much point in adding such a mixture of D- and L-amino acids to human food, since D-amino acids have no value as building material, while addition of a considerable amount of D-amino acids will not be permitted by law. The only possibility in this case is the return to the waste water purification plant, which results in increased investment and variable costs.

However, from an environmental point of view a process of this kind is not attractive anyway, because all sodium hydroxide used is discharged into the surface water in the form of sodium salts. This brings moreover an extra consumption of chemicals because the hydrolysate, prior to being returned to the plant, must first be neutralized. The pH value and the quantity of liquid are such that interference with the action of the biologically active microorganisms may be the result.

The purpose of the invention is to provide a process in which these disadvantages do not occur.

The process according to the invention is characterized in that the suspension of the sludge is given a pH value of between 8 and 11 and that hydrolysis is carried out in the presence of a volatile base at a temperature of between 90 and 300 °C, which base is expelled from the hydrolysate formed after the hydrolysis has been terminated. By preference, ammonia or a bound form thereof (e.g. ammonium carbonate) is applied for volatile base. The ammonia that has been removed from the hydrolysate is returned to the hydrolysis stage. The hydrolysis is, preferably, carried out at a temperature of between 90 and 200 °C.

A process of this kind brings great advantages over known processes. Since, at the pH value applied, practically no racemization of amino acids occurs, a hydrolysate is obtained which mainly contains the amino acids and oligopeptides occuring in nature.

It is surprising that it is possible to hydrolyze microorganisms with the aid of a weak base like ammonia. Normally, such hydrolysis is carried out with sodium hydroxide, for the very reason that the high pH values (13 and higher) necessary for hydrolysis of the organic substances present can be reached therewith. According to the invention, however, alkaline hydrolysis of biologically activated sludge is possible already at a pH value of 8.

The process according to the invention has the great advantage that it entails practically no extra costs for chemicals. The volatile base used, like ammonia, is recovered by stripping the liquid, e.g. with an inert gas or gasmixture like air or steam, and can be refused. Without much trouble the residual content of ammonia can be reduced to 10 ppm after the stripping. If sodium hydroxide or calcium oxide is used, new chemicals must continually be supplied, which places a heavy financial burden on the waste water purification. Moreover, it may be necessary first to neutralize the hydrolysate before it can be used further. It is preferred that, after the solid matter and the volatile base have been separated off, the hydrolysate be further processed to economically attractive products. Here, one may think of recovery of one or more of the amino acids present, for instance with the aid of selective ion exchange or crystallization. In addition, it is possible to recover aromatic nitrogen bases. Particularly those bases are important that are based on pyrimidines and/or purines. These originate in, among others, the genetic material of the microorganisms in the sludge. Another application of the hydrolysate may be the processing into cattle feed, while, in certain cases, it may be the best solution to use the hydrolysate as carbon source in the denitrification step of an industrial waste water purification plant, possibly after one or more nitrogen compounds have been separated off. In addition, the hydrolysate may also be mixed with the raw waste water and be passed through the entire plant, during which, contrary to the known process, no disturbance of the pH equilibrium in the plant occurs. Returning of the hydrolysate to the waste water purification plant, however, is only possible if one has a waste water purification in which also nitrogen compounds are removed, because otherwise an unacceptable amount of nitrate will be discharged into the surface water.

2

The process according to the invention can be realized at the usual pressures for handling aqueous $NH_3$ solutions. By preference, the pressure lies between 0.1 - 5 MPa. The concentration of ammonia and/or ammonium carbonate amounts preferably to 2 to 14 N. It is possible to carry out the hydrolysis under such conditions that complete or partial de-amination of the amino acids present occurs. In the case of a return of the hydrolysate to the waste water purification plant this brings the advantage that a substantially smaller nitrogen load occurs. For deamination to be achieved it is necessary to work at higher temperatures and $NH_3$ concentrations, for instance a temperature above 150 °C and a concentration of between 4 and 14 N $NH_3$. If it should not be the intention to deaminate, it is to be preferred to work at temperatures of between 90 and 180 °C and at an $NH_3$ concentration of between 2 and 6 N $NH_3$.

The sludge suspension to be hydrolyzed contains, depending on the type of plant of origin, varying contents of sludge (dry matter). This may vary between less than 1 % by weight and more than 35 % by weight.

A possible embodiment of the process according to the invention is described with the aid of the drawing, but is not limited thereto.

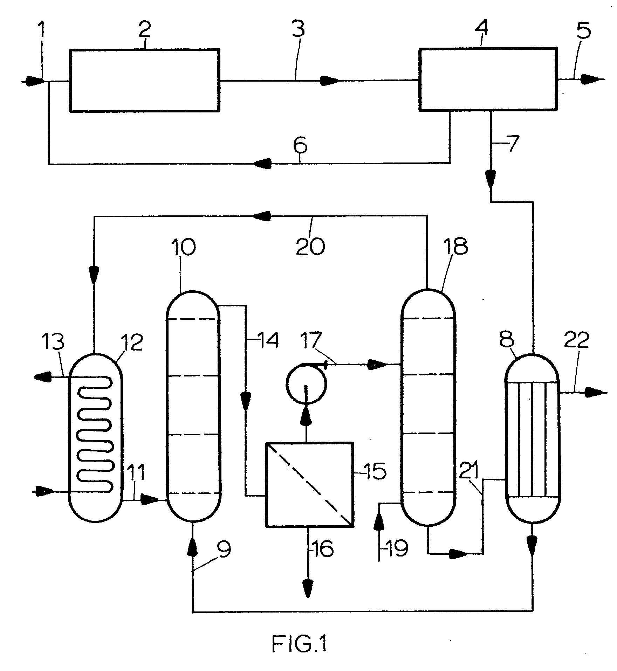

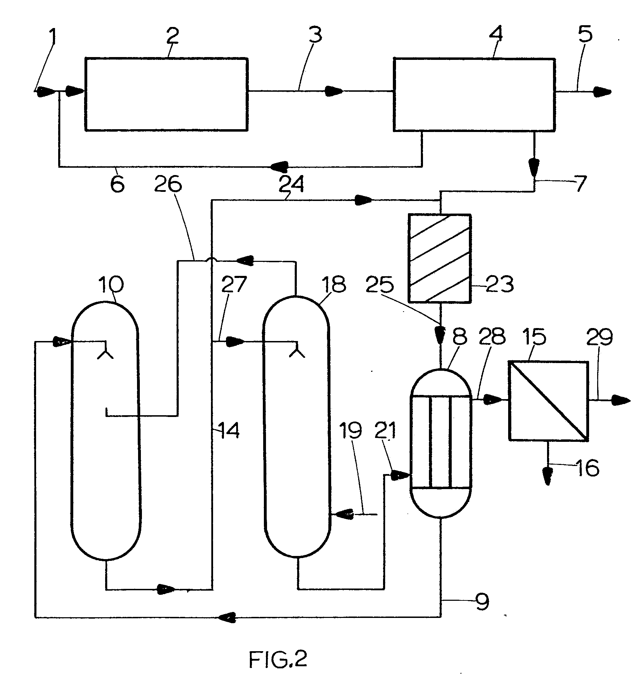

Figure 1 of the drawing shows a possible embodiment of the process according to the invention, and Figure 2 shows another embodiment thereof.

Figure 1 shows a diagram for a process for purification of waste water according to the invention. Waste water here enters via line 1 biological purification plant 2, here indicated as a block. Depending on the kind of waste water, the design of this plant will be more, or less, complicated. The purified waste water, which contains suspended biologically activated sludge, is led through line 3 to section 4, where the sludge settles and thickens. Via line 5 purified water is discharged into surface water or for further treatment, for instance with chlorine. Via line 6 a sludge suspension from section 4 is recycled to the biological purification plant. Via line 7 a concentrated sludge suspension is passed to heat exchanger 8. Via line 9 the heated suspension is led into hydrolysis column 10. Via line 11 a gas mixture of $NH_3$ and steam originating in heater 12 is supplied.

In heater 12 the mixture of $NH_3$ and steam is heated with the aid of steam coil 13. The hydrolyzed sludge suspension leaves hydrolysis column 10 via line 14. In filtration equipment 15, which may, for instance, consist of filters, sieve bends or centrifuges, this suspension is split up into a hydrolysate and solid matter. The solid matter is discharged via line 16. Through line 17 the hydrolysate proceeds to desorption column 18.

In this column the $NH_3$ is desorbed with the aid of steam which is introduced, via line 19, into desorption column 18 directly. The desorbed $NH_3$, together with a quantity of steam, is recycled to heater 12 via line 20. Via line 21 the hydrolysate leaves desorption column 18. After heat exchange with the suspension from settling basin 4 in heat exchanger 8 the hydrolysate is discharged via line 22.

Figure 2, in which the various reference numbers have the same meaning as in Figure 1, shows another embodiment of the process according to the invention.

Waste water here enters biological purification plant 2 via line 1. The purified waste water, which contains suspended activated sludge, is led through line 3 to section 4, where the sludge settles and thickens. Via line 5 purified water is discharged. Via line 6 part of the sludge suspension from section 4 is recycled to the purification plant.

Via line 7 a concentrated sludge suspension is led to static mixer 23, in which this suspension is mixed with hydrolyzed sludge that is supplied through line 24. The mixture is passed to heat exchanger 8 via line 25. The heated suspension is led into hydrolysis column 10 via line 9. Via line 26 a steam/$NH_3$ mixture is led into hydrolysis column 10. Via line 14 the treated sludge suspension is discharged. Part of this suspension is mixed with the sludge suspension from section 4, another part is supplied to desorption column 18 via line 27. Via line 19 the steam required for the desorption and the hydrolysis is supplied.

Via line 21 the hydrolyzed sludge suspension is discharged. After heat exchange in heat exchanger 8 the suspension is led into filtration equipment 15 via line 28 and separated into solid matter, which is discharged via 16, and liquid, which is discharged via 29.

A number of tests have been carried out on a laboratory scale in which aqueous sludge suspensions from a biological purification plant have been hydrolyzed in a basic medium, 100 ml of a 10 % sludge suspension in water has been hydrolyzed in a basic medium for a certain time at a variable temperature. The results are rendered in the table.

The chemical oxygen demand (COD) is given in the last column. This is a measure of the hydrolysis of the biologically active sludge.

| Test | Medium | Reaction in time (hours) | Reaction temperature (°C) | COD mg/g solid matter |
|---|---|---|---|---|
| 1 | 4 n $NH_3$ | 3/2 | 130 | 320 |
| 2 | 4 n $NH_3$ | 3/2 | 150 | 310 |
| 3 | 4 n $NH_3$ | 3/2 | 180 | 280 |
| 4 | 2 moles/1 $(NH_4)_2CO_3$ | 3/2 | 130 | 300 |
| 5 | $H_2O$ | 3/2 | 100 | 38 |
| 6 | $Ba(OH)_2$ | 36 | 100 | 120 |
| 7 | CaO | 48 | 100 | 54 |
| 8 | $H_2O$ | 3/2 | 150 | 120 |
| 9 | Standard (HCl hydrolysis) | — | — | 310 |

This table shows clearly that is is very well possible to practically completely hydrolyze the sludge with $NH_3$ or $(NH_4)_2CO_3$.

It can also be seen that at less mild reaction conditions the COD content becomes lower, which points to deamination.

For the hydrolysate obtained in test 1 has been determined wich amino acids were present. The quantities are given in milligrams.

| | |
|---|---|
| aspariginic acid | 10.9 |
| threonine | 3.9 |
| serine | 3.1 |
| glutaminic acid | 10.3 |
| glycine | 6.9 |
| alanine | 6.9 |
| valine | 6.4 |
| leucine | 6.4 |
| tyrosine | 2.7 |
| phenylalanine | 4.1 |
| isoleucine | 3.5 |
| lysine     5.2 | 5.2 |
| histidine | 1.5 |
| arginine | 1.4 |
| total amino acids | 73.2 mg |

At a sludge production of 32.0 tons/h as in example 1, this results in an amino acid quantity of approximately 24 kg/h.

The invention will now be elucidated with the aid of a few examples, but is not limited thereto.

Example 1

Waste water from a chemical complex is supplied to a plant as described in Figure 1. During the purification of the waste water 32.0 tons/h of sludge suspension is produced, which is discharged from section 4 via line 6. The sludge suspension contains 20 % of sludge (dry matter), approximately 75 % of which is inorganic material and approximately 25 % organic material. The organic material mainly consists of microorganisms and these principally contain amino acids, carbohydrates and fats in a ratio of 5 : 4 : 1. This suspension is hydrolyzed in hydrolysis column 10 with the aid of 2 tons/h of $NH_3$ and steam at a temperature of 130°C and a pressure of 0.7 MPa. The hydrolyzed sludge is separated, in 15, into 2.4 tons/h of solid matter and 35.6 tons/h of hydrolysate, which contains 0.8 ton/h of organic material and 32.8 tons/h of water. The solid matter contains 90 % of the heavy metals which were present in the sludge suspension. The hydrolysate is treated in desorption column 18 with steam of 1.6 MPa, all $NH_3$ escaping and being recycled via line 20. Ultimately, 39.0 tons/h of hydrolysate, 0.8 ton of which is organic material, is discharged via line 23.

Exemple 2

Waste water from a chemical complex is supplied to a plant as described in Figure 2. During the purification of the waste water 275 tons/day of sludge suspension in produced, which is discharged from

4

section 4 via line 6. The sludge suspension contains 20 % of sludge (dry matter), approximately 75 % of which is inorganic material and approximately 25 % organic material. The organic material mainly consists of microorganisms and these principally contain amino acids, carbohydrates and fats in a ratio of 5 : 4 : 1. This suspension is hydrolyzed in hydrolysis column 10 with the aid of 56.8 tons/day of $NH_3$/steam mixture at a temperature of 130°C and a pressure of 10 ats abs. The hydrolysate is treated in desorption column 18 with steam of 1 MPa, all $NH_3$ and part of the steam escaping and being recycled via line 20. The hydrolyzed sludge is separated in 15 into 37.5 tons/h of solids matter and 296.7 tons/day of hydrolysate, which contains 17.5 tons/day of organic material and 279.2 tons/day of water.

The solid mater contains 90 % of the heavy metals that were present in the sludge suspension.

### Claims

1. Process for biological purification of waste water, in which a suspension of the sludge formed during the purification is hydrolyzed in a basic medium and at an elevated temperature, this process being characterized in that the hydrolysis is carried out at a pH of 8-11 and at a temperature of 90-300°C using a volatile base, which base, after the hydrolysis has been terminated, is expelled from the hydrolysate formed.

2. Process according to Claim 1, characterized in that hydrolysis is carried out at a temperature of between 90 and 200°C.

3. Process according to Claim 1 or 2, characterized in that ammonia is used for volatile base.

4. Process according to Claim 1 or 2, characterized in that ammonium carbonate is used for volatile base.

5. Process according to any of the Claims 1-4, characterized in that the volatile base which has been expelled from the liquid is returned to the hydrolysis.

6. Process according to any of the Claims 1-5, characterized in that one or more N-compounds are recovered from the hydrolysate formed.

7. Process according to any of the Claims 1-6, characterized in that the hydrolysate formed is fully of partly processed to cattle feed.

8. Process according to any of the Claims 1-7, characterized in that the hydrolysate formed, is returned after the solid matter has been separated off, to the biological purification plant.

9. Process according to any of the Claims 1-7, characterized in that the volatile base is stripped from the hydrolysate with an inert gas or gas mixture.

10. Process according to any of the Claims 1, 3-7, characterized in that the process is carried out under conditions at which deamination occurs.

11. Process according to Claim 10, characterized in that hydrolysis is carried out normally at a temperature of between 150 and 300°C and an $NH_3$ concentration of between 4 and 14 normal.

### Patentansprüche

1. Verfahren zur biologischen Reinigung von Abwasser, in dem eine Suspension des während der Reinigung anfallenden Schlamms in einem basischen Medium und bei erhöhter Temperatur hydrolisiert wird, dadurch gekennzeichnet, dass die Hydrolyse bei einem pH-Wert von 8-11 und einer Temperatur von 90-300°C durchgeführt wird, unter Benutzung einer flüchtigen Base, die nach der Hydrolyse aus dem gebildeten Hydrolysat ausgetrieben wird.

2. Verfahren nach Anspruch 1, dadurch gekennzeichnet, dass die Hydrolyse bei einer Temperatur zwischen 90 und 200°C vorgenommen wird.

3. Verfahren nach Anspruch 1 oder 2, dadurch gekennzeichnet, dass für die flüchtige Base Ammoniak verwendet wird.

4. Verfahren nach Anspruch 1 oder 2, dadurch gekennzeichnet, dass für die flüchtige Base Ammoniumcarbonat verwendet wird.

5. Verfahren nach einem der Ansprüche 1-4, dadurch gekennzeichnet, dass die aus der Flüssigkeit ausgetriebene flüchtige Base der Hydrolyse zurückgeführt wird.

6. Verfahren nach einem der Ansprüche 1-5, dadurch gekennzeichnet, dass eine oder mehrere N-Verbindungen auf dem anfallenden Hydrolysat gewonnen werden.

7. Verfahren nach einem der Ansprüche 1-6, dadurch gekennzeichnet, dass das anfallende Hydrolysat ganz oder teils zu Viehfutter verarbeitet wird.

8. Verfahren nach einem der Ansprüche 1-7, dadurch gekennzeichnet, dass das anfallende Hydrolysat nach Abscheiden des Feststoffs der biologischen Reinigungsanlage zurückgeführt wird.

9. Verfahren nach einem der Ansprüche 1-7, dadurch gekennzeichnet, dass die flüchtige Base mittels eines inerten Gases oder eines Gasgemisches aus dem Hydrolysat abgetrieben wird.

10. Verfahren nach einem der Ansprüche 1 und 3-7, dadurch gekennzeichnet, dass das Verfahren unter Bedingungen durchgeführt wird, bei denen eine Entaminierung auftritt.

11. Verfahren nach Anspruch 10, dadurch gekennzeichnet, dass die Hydrolyse normalerweise bei einer Temperatur 150 und 300°C sowie einer $NH_3$-Konzentration zwischen 4 und 14 normal stattfindet.

**Revendications**

1. Procédé de purification biologique d'eaux résiduaires, selon lequel une suspension de la boue formée pendant la purification est hydrolysée dans un milieu basique et à des températures élevées, lequel procédé se caractérise en ce que l'hydrolyse est effectuée à un pH de 8-11 et à des températures situées entre 90-300°C alors qu'on utilise une base volatile qui, l'hydrolyse étant terminée, est dégagée du produit d'hydrolyse formé.

2. Procédé selon la revendication 1, caractérisé en ce que l'hydrolyse est effectuée à une température située entre 90 et 200°C.

3. Procédé selon l'une des revendications 1 à 2, caractérisé en ce que de l'ammoniaque est utilisée comme base volatile.

4. Procédé selon l'une des revendications 1 à 2, caractérisé en ce que du carbamate d'ammonium est utilisé comme base volatile.

5. Procédé selon l'une des revendications 1 à 4, caractérisé en ce que la base volatile dégagée du liquide est ramenée à l'hydrolyse.

6. Procédé selon l'une des revendications 1 à 5, caractérisé en ce que un ou plusieurs mélanges de N sont récupérés du produit d'hydrolyse formé.

7. Procédé selon l'une des revendications 1 à 6, caractérisé en ce que le produit d'hydrolyse formé est transformé entièrement ou partiellement en fourrage.

8. Procédé selon l'une des revendications 1 à 7, caractérisé en ce que le produit d'hydrolyse formé est ramené -après que l'agent solide en est séparé- à l'installation de purification biologique.

9. Procédé selon l'une des revendications 1 à 7, caractérisé en ce que la base volatile est chassée du produit d'hydrolyse à l'aide d'un gaz inert ou d'un mélange de gaz.

10. Procédé selon l'une des revendications 1, 3 à 7, caractérisé en ce que le processus est exécuté sous des conditions dans lesquelles il se produit une désamination.

11. Procédé selon la revendication 10, caractérisé en ce que l'hydrolyse est normalement exécutée à une température située entre 150 et 300°C et à une concentration de $NH_3$ située entre 4 et 14 normale.

FIG.1

FIG.2